# EUROPEAN PATENT APPLICATION

(11) **EP 2 427 020 A1**
(43) Date of publication of application: **07.03.2012**
(21) Application number: 09843866.6
(22) Date of filing: 28.04.2009
(51) Int. Cl.: H04W 80/00

(54) **MOBILE COMMUNICATION METHOD, BASE STATION AND SYSTEM ADOPTING A CONFIGURATION OF MULTIPLE-LAYER VIRTUAL ANTENNAS**

(71) Applicant: Alcatel Lucent, 75007 Paris (FR)
(72) Inventor: LI, Dong, Shanghai 201206 (CN); CAI, Liyu, Shanghai 201206 (CN)
(74) Representative: Dreiss
(86) International application number: PCT/CN2009/071532
(87) International publication number: WO 2010/124454

(57) **Abstract**

A mobile communication method, a base station and a mobile communication system employing a hierarchical virtual antenna architecture are disclosed. The method comprises steps of: negotiating, by a first base station, with a second base station about a transmission mode with a mobile station; and according to the negotiated transmission mode, negotiating, by the first base station, with the second base station about respective demodulation reference signal frequency pattern allocation and measurement reference signal frequency pattern allocation in the hierarchical virtual antenna architecture. The flexible and effective reference signals may be realized in various multi-cell Multiple-Input Multiple-Output (MIMO) operation modes by the method.

## Description

### FIELD OF THE INVENTION

The present invention generally relates to mobile communication, and more particularly to a mobile communication method, a base station and a system employing a hierarchical virtual antenna architecture.

### BACKGROUND OF THE INVENTION

From technology evolvement point of view, academic studies and application development of MIMO (Multiple-Input Multiple-Output) technology have evolved from traditional single-user MIMO to multi-user MIMO, and then to multi-cell MIMO. The single-user MIMO (such as single-user diversity schemes and spatial multiplexing schemes) emerged and was intensely studied about 10 years ago; the multi-user MIMO emerged and was hotly discussed about 5 years ago; and the multi-cell MIMO (such as CoMP (coordinated multi-point) scheme in LTE-Advanced) emerged 2-3 years ago and is still being studied currently in the fields of both academic research and application development.

Multi-cell MIMO can bring attractive benefits, such as apparent cell-edge and cell-average throughput gains, but on the other side, the advanced multi-cell collaborative operation also brings some constraints and challenges in the system design, such as the reference signal (RS) design enabling the efficient multi-cell MIMO operation. Reference signals may be classified into two types: one type is called demodulation reference signal (D-RS) for performing data demodulation for each mobile station, and the other type is called measurement reference signal (M-RS) for channel estimation and channel measurement. The two types of signals are both known in the prior art and will not be discussed any more herein.

Solutions for the reference signal design for multi-cell MIMO have already existed in the prior art, for example, QUALCOMM Incorporated proposed that the demodulation reference signal patterns of multi-cell MIMO shall be orthogonal. But these solutions all have the following disadvantages.

1) Actually, in practical systems, both the D-RS and the M-RS will be simultaneously involved in the multi-cell MIMO operation, but there still wasn't a complete solution for both the D-RS and M-RS design.

2) In practical systems, different base stations may be equipped with different number of antennas, which brings some inconvenience and challenges to multi-cell MIMO operations.

### SUMMARY OF THE INVENTION

It is an object of the present invention to provide a smart solution for the reference signal design for multi-cell MIMO by exploiting the multi-cell cooperation in a hierarchical virtual antenna architecture, in view of the above technical problems unsolved in the prior art.

According to one aspect of the present invention, there is provided a mobile communication method employing a hierarchical virtual antenna architecture, comprising steps of: negotiating, by a first base station, with a second base station about a transmission mode with a mobile station; and according to the negotiated transmission mode, negotiating, by the first base station, with the second base station about respective D-RS frequency pattern allocation and M-RS frequency pattern allocation in the hierarchical virtual antenna architecture.

According to another aspect of the present invention, there is provided a base station employing a hierarchical virtual antenna architecture comprising: a transmission mode negotiating means for negotiating with another base station about a transmission mode with a mobile station; and a frequency pattern allocation negotiating means for, according to the negotiated transmission mode, negotiating with said another base station about respective D-RS frequency pattern allocation and M-RS frequency pattern allocation in the hierarchical virtual antenna architecture.

According to another aspect of the present invention, there is provided a mobile communication system employing a hierarchical virtual antenna architecture comprising a base station according to the present invention.

The flexible and effective reference signals may be obtained in various multi-cell MIMO operation modes by the present invention. Specifically, the present invention provides a mechanism and method for multi-cell negotiation and cooperation, wherein the D-RS frequency pattern allocation and the M-RS frequency pattern allocation applied to each base station are determined based on specific multi-cell MIMO operation modes to thereby reduce overhead of reference signals and flexibly avoid interference to the reference signals. In addition, the present invention is further applicable to the situation that multiple base stations in a multi-cell MIMO base station set respectively have different numbers of antennas.

### BRIEF DESCRIPTION OF THE DRAWINGS

Other featuers and advantages of the invention may be better understood from a reading of the following detailed description taken in conjunction with the drawings in which:

FIG. 1 illustrates a schematic diagram of basic principle for a reference signal employing an antenna architecture in the prior art.

FIG. 2 illustrates a schematic diagram of basic principle for a multi-cell cooperative reference signal employing a hierarchical virtual antenna architecture according to the present invention.

FIG. 3A illustrates a schematic diagram of a multi-cell cooperative reference signal employing a hierarchical virtual antenna architecture according to one embodiment of the present invention.

FIG. 3B illustrates a demodulation reference signal frequency pattern allocation of the reference signal as shown in FIG. 3A.

FIG. 4A illustrates a schematic diagram of a multi-cell cooperative reference signal employing a hierarchical virtual antenna architecture according to a sub-embodiment of the embodiment as shown in FIG. 3A.

FIG. 4B illustrates a demodulation reference signal frequency pattern allocation of the reference signal as shown in FIG. 4A.

FIG. 5A illustrates a schematic diagram of a multi-cell cooperative reference signal employing a hierarchical virtual antenna architecture according to another embodiment of the present invention.

FIG. 5B illustrates a demodulation reference signal frequency pattern allocation of the reference signal as shown in FIG. 5A.

FIG. 6A illustrates a schematic diagram of a multi-cell cooperative reference signal employing a hierarchical virtual antenna architecture according to another embodiment of the present invention.

FIG. 6B illustrates a demodulation reference signal frequency pattern allocation of the reference signal as shown in FIG. 6A.

FIG. 7 illustrates a measurement reference signal frequency pattern allocation of two base stations in the examples shown in FIGs. 3A, 4A and 5A.

FIG. 8 illustrates a measurement reference signal frequency pattern allocation of two base stations in the example shown in FIG. 6A.

FIG. 9 illustrates a flowchart of a method in accordance with one embodiment of the present invention.

FIG. 10 illustrates in greater detail the flowchart of the method as shown in FIG. 9.

FIG. 11 illustrates a block diagram of a base station in accordance with one embodiment of the present invention.

### DETAILED DESCRIPTION OF EMBODIMENTS

The present invention is now described with reference to the accompanying drawings, wherein the same reference signs represent same or similar elements throughout the whole text.

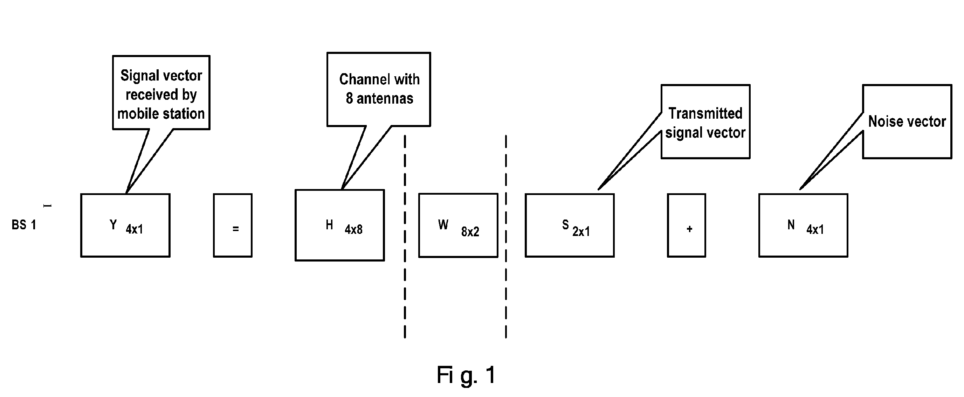

FIG. 1 illustrates a schematic diagram of basic principle for a reference signal employing an antenna architecture in the prior art. In FIG. 1, one base station B S 1 and one mobile station (user) are assumed to be involved. The reference signal design in the prior art is based on the architecture of two fixed virtual antenna layers. As shown in FIG. 1, the demodulation reference signal is inserted before W pre-coding (shown in FIG. 1 as "W_{8×2}") (as shown by the dashed line between "W_{8×2}" and "S_{2×1}" in FIG. 1) while the measurement reference signal is inserted after the W pre-coding (as shown by the dashed line between "H_{4×8}" and "W_{8×2}" in FIG. 1).

However, the architecture of the two fixed virtual antenna layers lacks enough flexibility and cannot flexibly configure the measurement reference signal in multiple virtual antenna layers.

In addition, the solution of the prior art is designed mainly based on reference signals in a single base station but does not relate to negotiation and cooperation between multiple base stations with respect to transmission mode and frequency pattern allocations, and thereby does not relate to specific designs made for respective transmission modes of multi-base station MIMO.

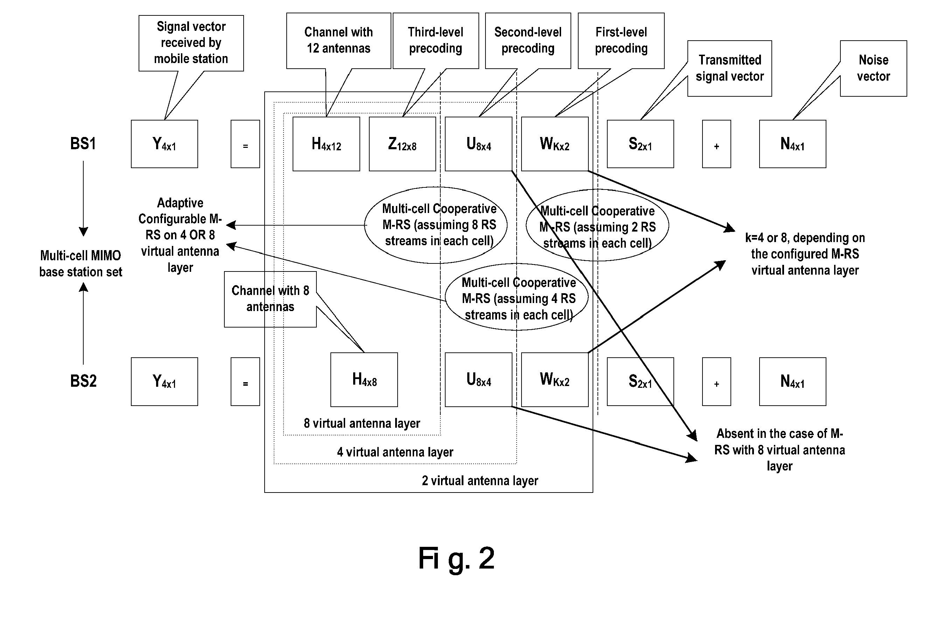

As described above, the present invention provides a solution for overcoming the above-mentioned defect in the prior art, which will be described in the following in connection with FIG. 2. FIG. 2 illustrates a schematic diagram of basic principle for a multi-cell cooperative reference signal employing a hierarchical virtual antenna architecture according to the present invention. In FIG. 2, two base stations BS1, BS2 and one mobile station MS1 are assumed to be involved. As shown in FIG. 2, the hierarchical virtual antenna architecture may be formed by a multiple-level precoding, e.g. including a first-level precoding, a second-level precoding, and a third-level precoding, etc., For example, it is may be formed 2 virtual antenna layer (wherein it is assumed that each base station has 2 RS streams for each mobile station), 4 virtual antenna layer (wherein it is assumed that each base station has 4 RS streams for each mobile station), 8 virtual antenna layer (wherein it is assumed that each base station has 8 RS streams for each mobile station), etc.. The D-RS may be inserted into data symbols (as shown by the dashed line between "W_{k×2}" and "S_{2×1}") in the inner layer of the hierarchical virtual antenna architecture (that is, before the W pre-coding, i.e., the 2 virtual antenna layer). Then the M-RS may be inserted into the precoded (e.g. second-level pre-coding) data symbols (as shown by the dashed line between "U_{8×4}" and "W_{k×2}") in another layer of the hierarchical virtual antenna architecture. In which layer of the hierarchical virtual antenna architecture, the measurement reference signal will be inserted into precoded data symbols (i.e. to which layer of the hierarchical virtual antenna architecture the measurement reference signal frequency pattern is to be applied) depends on the negotiation between base stations in the involved multi-cell MIMO base station set.

That is to say, a multi-cell negotiation needs to be made to determine the D-RS frequency patterns and the M-RS frequency patterns within each base station in the multi-cell MIMO base station set. Details are provided as below.

The D-RS frequency pattern allocation within the multi-cell MIMO base station set is described firstly. It should be noted that different multi-cell MIMO operation modes have different requirements on the D-RS frequency pattern allocation within the multi-cell MIMO base station set. For example, in a Closed-Loop Macro-Diversity (CL-MD) mode, different base stations may have exactly the same D-RS frequency patterns, while in an interference nulling mode, different base stations may have different D-RS frequency patterns.

For the D-RS frequency pattern allocation, multiple base stations in the multi-cell MIMO base station set may reach an agreement in the following aspects:

an index of the D-RS frequency pattern set, e.g., 4 D-RS frequency patterns may be considered; and

an index of the D-RS frequency pattern for each RS stream in the above D-RS frequency pattern set.

Alternatively, an agreement may also be reached in the following aspect:

if there are unused D-RS frequency patterns, it may be negotiated as to whether data symbols or null symbols (i.e., 00...0) are transmitted on the unused D-RS frequency patterns, that is to say, whether to perform data transmission or data puncturing.

For the M-RS frequency pattern allocation, multiple base stations in the multi-cell MIMO base station set may reach an agreement in the following aspects:

an index of the M-RS frequency pattern set, e.g., 4 or 8 M-RS frequency patterns will be used;

which layer of the hierarchical virtual antenna architecture the M-RS frequency patterns will be applied to, that is, whether the M-RS frequency patterns will be applied to the 4 virtual antenna layer or 8 virtual antenna layer in Fig. 2; and

an index of the M-RS frequency patterns within the M-RS frequency pattern set.

Optionally, an agreement may also be reached in the following aspect:

if there are unused M-RS frequency patterns, it may be negotiated whether data symbols or null symbols (i.e., 00...0) are transmitted on the unused M-RS frequency patterns.

Those skilled in the art should understand that the above negotiation contents on the D-RS frequency pattern allocation and the M-RS frequency pattern allocation are only illustrative rather than restrictive, and in practice, the D-RS frequency pattern allocation and the M-RS frequency pattern allocation of each base station in hierarchical virtual antenna architecture may be negotiated in accordance with different transmission modes and application requirements. For example, it may be defaulted that if there are unused D-RS frequency patterns, data symbols will be transmitted on the unused D-RS frequency patterns so as to omit the negotiation contents. For another example, other negotiation contents may be added in accordance with requirements.

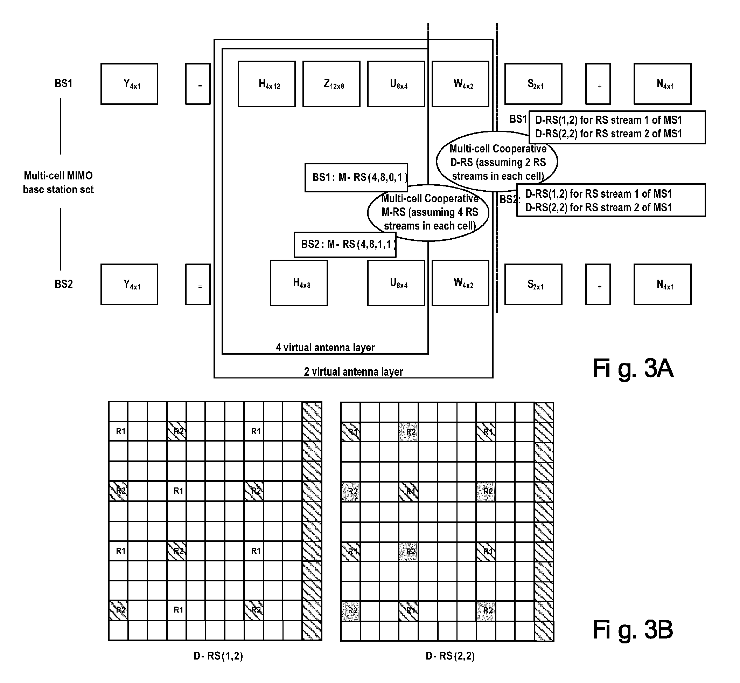

In the following, the present invention will be described in greater detail in conjunction with preferred embodiments with reference to FIG. 3A to FIG. 8.

FIG. 3A illustrates a schematic diagram of a multi-cell cooperative reference signal employing a hierarchical virtual antenna architecture according to one embodiment of the present invention, and FIG. 3B illustrates a demodulation reference signal frequency pattern allocation of the reference signal as shown in FIG. 3A. In the two figures, the Closed-Loop Macro-Diversity mode is employed, and two base stations BS1 and BS2 and one mobile station MS1 are assumed to be involved as described above.

As shown in FIG. 3B, the D-RS frequency pattern allocation for each base station in the multi-cell MIMO base station set may be represented as D-RS(a, b, [c]), wherein the meanings of a, b and c are respectively as follows:

b indicates that the D-RS frequency pattern set which has totally b D-RS frequency patterns will be applied (i.e. the index of the D-RS frequency pattern set as mentioned above);

a indicates the index of the D-RS frequency pattern (in the above D-RS frequency pattern set) for each RS stream; and

c is a two-bit indicator and will only be present if max(a) < b stands for all RS streams. The first bit of c indicates whether data puncturing is performed on the RS frequency patterns corresponding to other RS streams within the base station, and in particular, 0 indicates "not puncturing" and 1 indicates "puncturing". The second bit indicates whether data puncturing is to be performed on the RS frequency patterns corresponding to the RS streams within other base stations of the multi-cell MIMO base station set, and in particular, 0 indicates "not puncturing" and 1 indicates "puncturing".

Taking FIGs. 3A and 3B as an example, for the base station BS1, D-RS(1, 2) indicates that the frequency pattern set which has totally 2 frequency patterns will be applied, and for RS stream 1 of the mobile station MS 1, the frequency pattern with the index of 1 is applied. D-RS(2, 2) indicates the frequency pattern with the index of 1 is applied for RS stream 1 of the mobile station MS2.

It is apparent that for the base station BS2, the same D-RS frequency pattern allocation is employed as that for the base station BS1, but it is not always necessarily.

In addition, parameter c does not appear in the above two figures because "max(a) < b stands for all RS streams" is not met in this case. This again proves that within the scope of the present invention, the above negotiation contents on the D-RS frequency pattern allocation and the M-RS frequency pattern allocation may have multiple variations.

As shown in FIG. 3A, the M-RS frequency pattern allocation for each base station in the multi-cell MIMO base station set may be represented as M-RS(e,f,g,h), wherein the meanings of e, f, g and h are respectively as follows:

e indicates the number of M-RS frequency patterns applied with the index of g of the subset;

f indicates that the M-RS frequency pattern set which has totally f M-RS frequency patterns will be applied (i.e. the index of the M-RS frequency pattern set as mentioned above);

g indicates the index of the applied M-RS frequency pattern subset; and

h indicates whether data puncturing is performed on the other M-RS frequency patterns other than the subset index of g, wherein 0 indicates "not puncturing" and 1 indicates "puncturing".

Taking FIGs. 3A and 3B as an example, for the base station BS1, M-RS(4,8,0,1) indicates that the number of M-RS frequency patterns applied with the subset index of 0 is 4; the frequency pattern set which has totally 8 frequency patterns will be applied; the index of the applied M-RS frequency pattern subset is 0; and data puncturing is not performed on the other M-RS frequency patterns other than those in the subset whose index is 0.

It is apparent that, for the base station BS2, the index of the applied M-RS frequency pattern subset is 1.

Seen from FIGs. 3A and 3B, since the frequency pattern set which has totally 8 frequency patterns is applied, the respective frequency pattern allocations of the base stations BS1 and BS2 may be selected from a broad scope.

In addition, as seen from FIGs. 3A and 3B, at each base station, the D-RS frequency pattern needs to be determined based on each RS stream of each mobile station (e.g. MS1), but no such a requirement is made to the M-RS frequency pattern (i.e. at each base station, the M-RS frequency pattern only needs to be determined based on each mobile station).

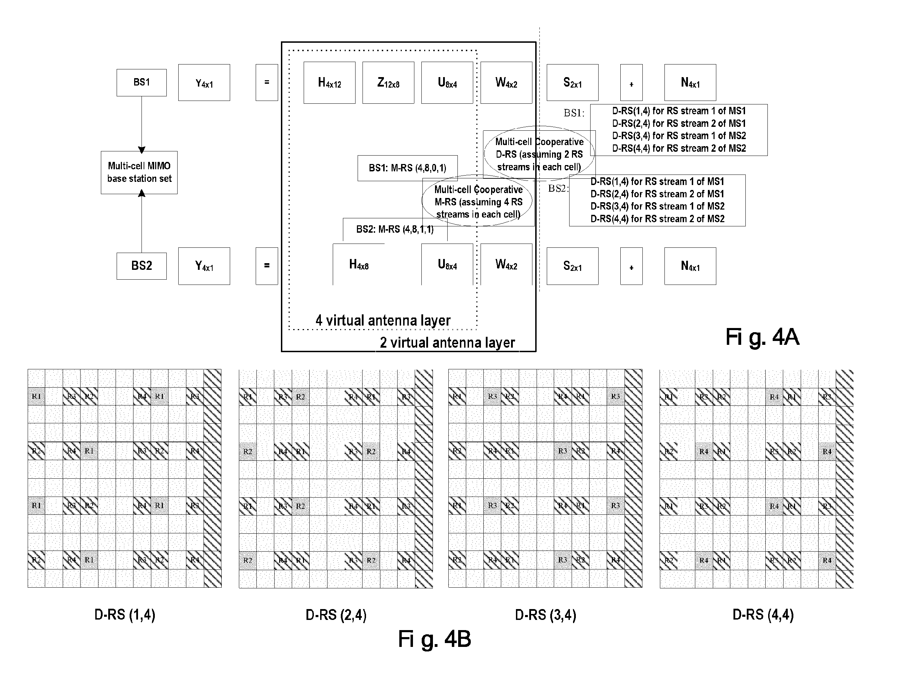

FIG. 4A illustrates a schematic diagram of a multi-cell cooperative reference signal employing a hierarchical virtual antenna architecture according to a sub-embodiment of the embodiment as shown in FIG. 3A, and FIG. 4B illustrates a demodulation reference signal frequency pattern allocation of the reference signal as shown in FIG. 4A. In the two figures, the mode of joint processing with coherent precoding is employed, and two base stations BS1 and BS2 and one mobile station MS1 are assumed to be involved as described above. Since the principle is similar to that shown in FIGs. 3A and 3B, detailed description for it is omitted here.

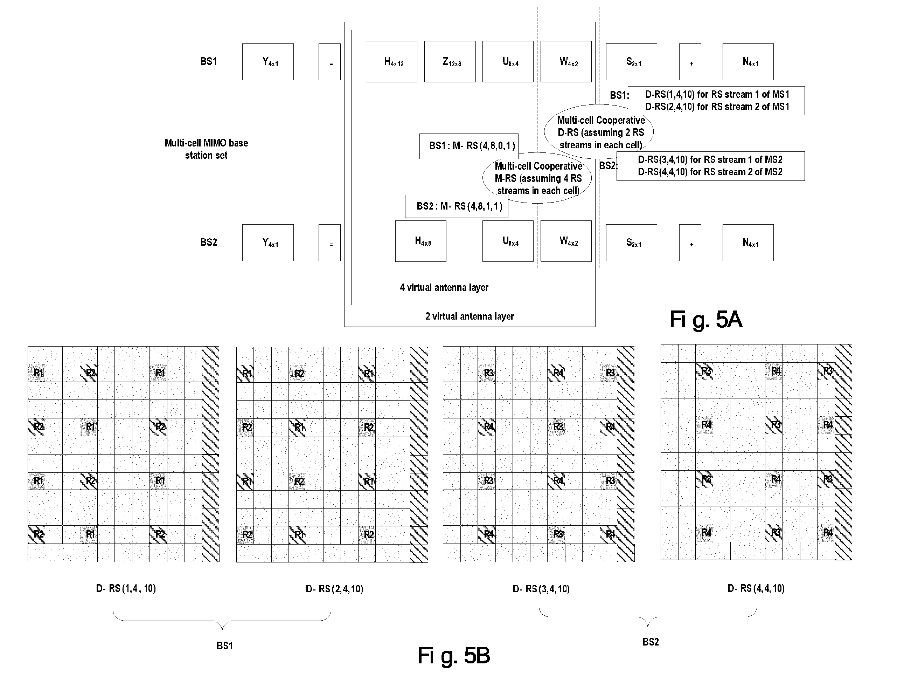

FIG. 5A illustrates a schematic diagram of a multi-cell cooperative reference signal employing a hierarchical virtual antenna architecture according to another embodiment of the present invention, and FIG. 5B illustrates a demodulation reference signal frequency pattern allocation of the reference signal as shown in FIG. 5A. In the two figures, the interference nulling mode is employed, and two base stations BS1 and BS2 and one mobile station MS1 are assumed to be involved as described above. Since the principle is similar to that shown in FIG. 3A and FIG. 3B, detailed description for it is omitted here. It needs to be specifically noted that parameter c appears in the above two figures because "max(a) < b stands for all RS streams" is met in this case. In this example, the parameter c includes two bits "10" indicating that data puncturing is performed on the RS frequency patterns corresponding to the other RS streams within the base station while data puncturing is not performed on the RS frequency patterns corresponding to the RS streams within other base stations of the multi-cell MIMO base station set.

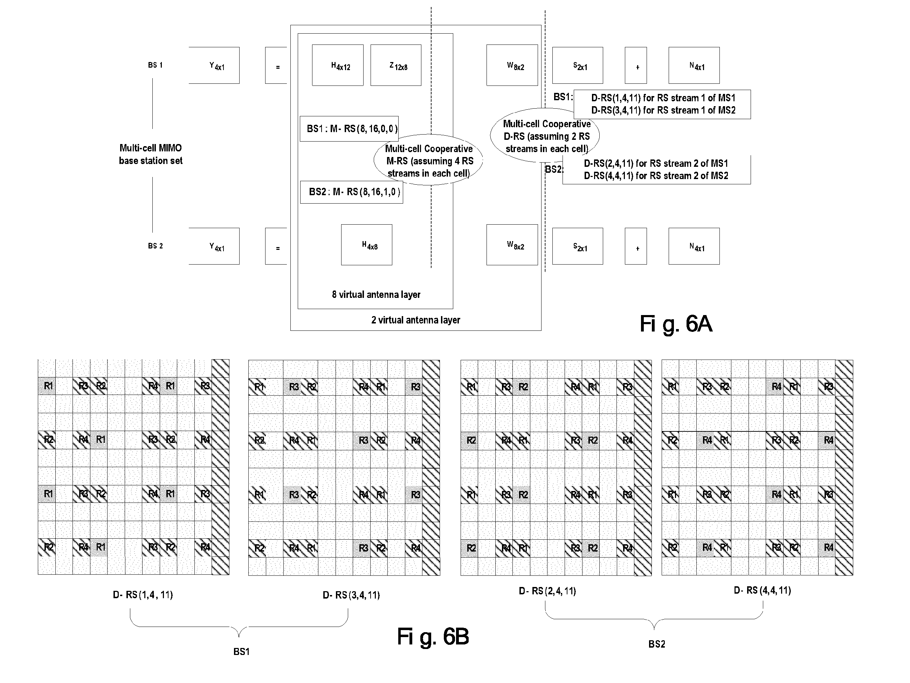

FIG. 6A illustrates a schematic diagram of a multi-cell cooperative reference signal employing a hierarchical virtual antenna architecture according to another embodiment of the present invention, and FIG. 6B illustrates a demodulation reference signal frequency pattern allocation of the reference signal as shown in FIG. 6A. In the two figures, the mode of joint processing with non-coherent precoding is employed, and two base stations BS1 and BS2 and two mobile stations MS1 and MS2 are assumed to be involved. Since the principle is similar to that shown in FIG. 3A and FIG. 3B, detailed description for it is omitted here.

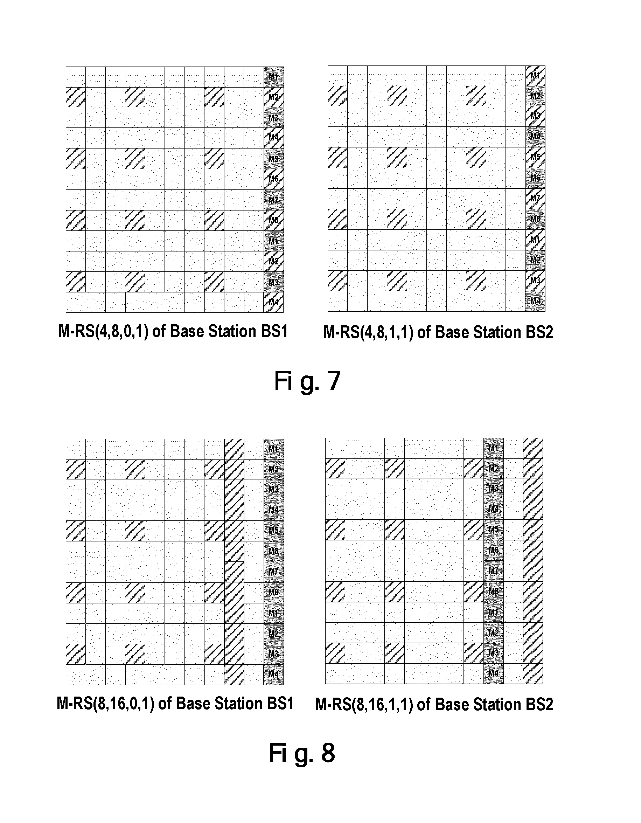

FIG. 7 illustrates a measurement reference signal frequency pattern allocation of two base stations in the examples shown in FIGs. 3A, 4A and 5A, and FIG. 8 illustrates a measurement reference signal frequency pattern allocation of two base stations in the example shown in FIG. 6A. Since the principle has been stated in the depictions of FIG. 3A and FIG. 3B, detailed description for it is omitted here.

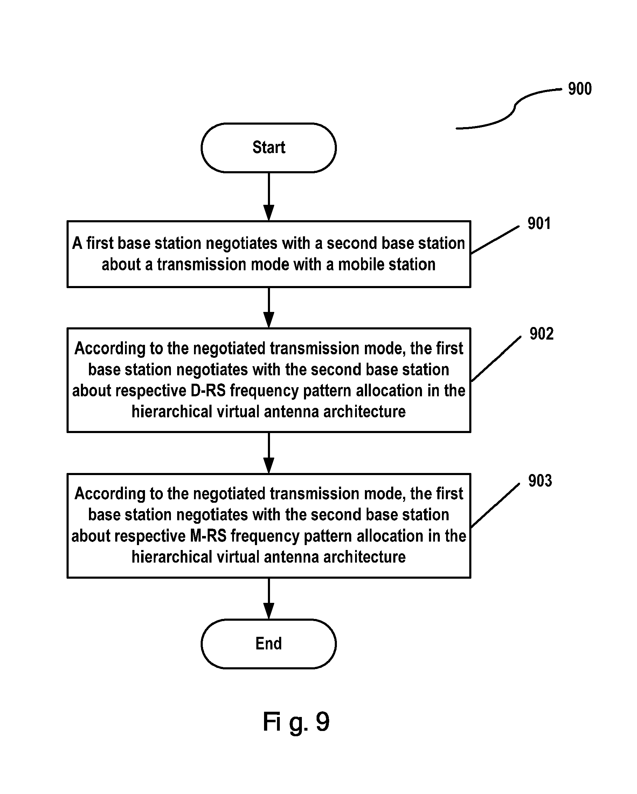

FIG. 9 illustrates a flowchart showing a method 900 in accordance with one embodiment of the present invention.

As shown in FIG. 9, the method 900 starts from Step 901, wherein a first base station negotiates with a second base station about a transmission mode with a mobile station, and the transmission mode, for example, may be a Closed-Loop Macro-Diversity (CL-MD) mode, a mode of joint processing with coherent precoding, an interference nulling mode, a mode of joint processing with non-coherent precoding, or other transmission modes existing now or developed in the future in the art.

In Step 902, according to the negotiated transmission mode, the first base station negotiates with the second base station about respective D-RS frequency pattern allocation in the hierarchical virtual antenna architecture. As described above, FIGs. 3A to 6B show the embodiments of D-RS frequency pattern allocation in various transmission modes. For example, if the negotiated transmission mode is a Closed-Loop Macro-Diversity mode, the employable D-RS frequency pattern allocation is as shown in FIGs. 3A and 3B. Alternatively, if the negotiated transmission mode is an interference nulling mode, the employable D-RS frequency pattern allocation is as shown in FIGs. 5A and 5B. Those skilled in the art should understand that the D-RS frequency pattern allocations shown in FIGs. 3A, 3B and FIGs. 5A, 5B are only illustrative rather than restrictive, and in practice, the specific D-RS frequency pattern allocation may be designed in accordance with different application requirements.

In Step 903, according to the negotiated transmission mode, the first base station negotiates with the second base station about respective M-RS frequency pattern allocation in the hierarchical virtual antenna architecture. As described above, FIGs. 3A to 8 show the embodiments of M-RS frequency pattern allocation in various transmission modes. For example, if the negotiated transmission mode is a Closed-Loop Macro-Diversity mode, the employable M-RS frequency pattern allocation is as shown in FIG. 7. Alternatively, if the negotiated transmission mode is a mode of joint processing with non-coherent precoding, the employable M-RS frequency pattern allocation is as shown in FIG. 8. Those skilled in the art should understand that the M-RS frequency pattern allocations shown in FIG. 7 and FIG. 8 are only illustrative rather than restrictive, and in practice, the specific M-RS frequency pattern allocation may be designed in accordance with different application requirements.

It needs to be pointed out that although Step 902 and Step 903 as two separate steps are described above, those skilled in the art should understand that the two steps may also be combined into one for performing.

After the above processing, through the negotiation among multiple base stations, the D-RS frequency pattern allocation and the M-RS frequency pattern allocation applied to each base station are determined according to specific multi-cell MIMO operation modes. Thereafter, multiple base stations may jointly provide services to the mobile station.

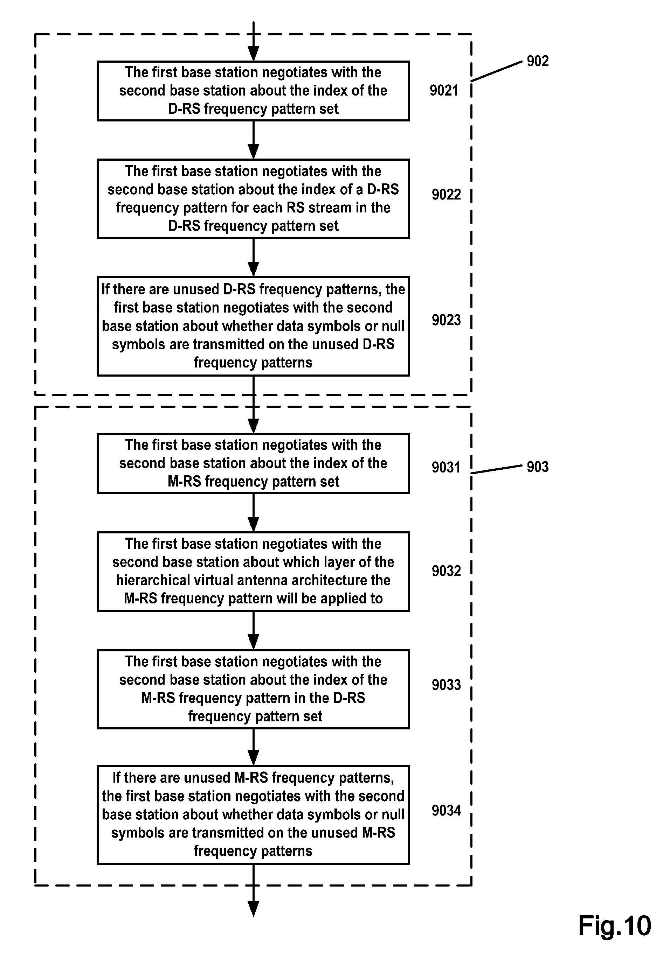

FIG. 10 illustrates in greater detail the flowchart showing the method as shown in FIG. 9.

As shown in FIG. 10, according to one embodiment of the present invention, Step 902 may be subdivided into Steps 9021-9023. In Ste p 9021, the first base station negotiates with the second base station about the index of the D-RS frequency pattern set. In Step 9022, the first base station negotiates with the second base station about the index of the D-RS frequency pattern for each RS stream in the D-RS frequency pattern set. In Step 9023, if there are unused D-RS frequency patterns, the first base station negotiates with the second base station about whether data symbols or null symbols are transmitted on the unused D-RS frequency patterns.

As shown in FIG. 10, according to one embodiment of the present invention, Step 903 may be subdivided into Steps 9031-9034. In Step 9031, the first base station negotiates with the second base station about the index of the M-RS frequency pattern set. In Step 9032, the first base station negotiates with the second base station about which layer of the hierarchical virtual antenna architecture the M-RS frequency pattern will be applied to. In Step 9033, the first base station negotiates with the second base station about the index of the M-RS frequency pattern in the D-RS frequency pattern set. In Step 9034, if there are unused M-RS frequency patterns, the first base station negotiates with the second base station about whether data symbols or null symbols are transmitted on the unused M-RS frequency patterns.

According to one embodiment of the present invention, the method 900 may further comprise applying a D-RS frequency pattern to the inner layer of the hierarchical virtual antenna architecture.

According to another embodiment of the present invention, the method 900 may further comprise applying a M-RS frequency pattern to one of the layers except for the inner layer of the hierarchical virtual antenna architecture. In the situation that a D-RS frequency patterns has been applied to the inner layer of the hierarchical virtual antenna architecture, since multiple layers of the hierarchical virtual antenna architecture are available, a M-RS frequency pattern may be applied to any one of the other layers of the hierarchical virtual antenna architecture in accordance with requirements.

According to another embodiment of the present invention, the first base station and the second base station have the same D-RS frequency pattern allocation in the hierarchical virtual antenna architecture, for example, in the case of a Closed-Loop Macro-Diversity (CL-MD) mode.

It should be understood by those skilled in the art that respective method steps described above are only illustrative rather than restrictive, and it should not be understood as these operations must be performed according to the shown, specific sequence or each method step described above must be performed. In practice, the sequence for performing these method steps may be adjusted in accordance with various application requirements, e.g. some method steps may be performed in parallel, or some steps may be omitted or added.

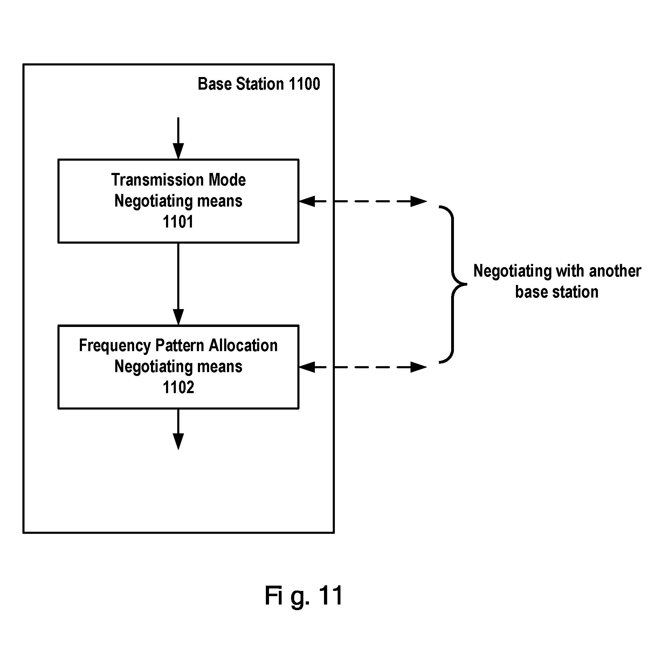

FIG. 11 illustrates a block diagram of a base station 1100 in accordance with one embodiment of the present invention. As shown in FIG. 11, the base station 1100 comprises a transmission mode negotiating means 1101 for negotiating with another base station about a transmission mode with a mobile station, and a frequency pattern allocation negotiating means 1102 for negotiating, based on the negotiated transmission mode, with said another base station about respective D-RS frequency pattern allocation and M-RS frequency pattern allocation in the hierarchical virtual antenna architecture.

According to one embodiment of the present invention, the frequency pattern allocation negotiating means 1102 further comprises means for negotiating the index of the D-RS frequency pattern set and means for negotiating the index of the D-RS frequency pattern for each RS stream in the D-RS frequency pattern set.

According to another embodiment of the present invention, the frequency pattern allocation negotiating means 1102 further comprises means for, if there are unused D-RS frequency patterns, negotiating whether data symbols or null symbols are transmitted on the unused D-RS frequency patterns.

According to another embodiment of the present invention, the frequency pattern allocation negotiating means 1102 further comprises means for negotiating an index of the M-RS frequency pattern set, means for negotiating which layer of the hierarchical virtual antenna architecture, the M-RS frequency pattern will be applied to, and means for negotiating an index of the M-RS frequency pattern in the M-RS frequency pattern set.

According to another embodiment of the present invention, the frequency pattern allocation negotiating means 1102 further comprises means for, if there are unused M-RS frequency patterns, negotiating whether data symbols or null symbols are transmitted on the unused M-RS frequency patterns.

According to another embodiment of the present invention, the frequency pattern allocation negotiating means 1102 further comprises means for applying a D-RS frequency pattern to the inner layer of the hierarchical virtual antenna architecture.

According to another embodiment of the present invention, said means for negotiating which layer of the hierarchical virtual antenna architecture the M-RS frequency pattern will be applied to further comprises means for applying a M-RS frequency pattern to one of the layers except for the inner layer of the hierarchical virtual antenna architecture.

According to another embodiment of the present invention, the base station and said another base station in the present invention have the same D-RS frequency pattern allocation in the hierarchical virtual antenna architecture.

Although the base station is described in the above embodiments according to the present invention, it should be appreciated by those skilled in the art that for conciseness, the functions and characteristics (e.g. transmitting and receiving antenna, power control module, etc.) of the base stations those are known to those skilled in the art but do not belong to the scope of the present invention are omitted and such omissions will not cause unclearness of the present invention.

The present invention further provides a mobile communication system employing a hierarchical virtual antenna architecture, which comprises a base station according to the present invention.

It needs to be specifically pointed out that the means shown in FIG. 11 may be implemented as separate function modules, and may also be combined into one or a few number of function modules, wherein the function modules may employ a complete hardware-based implementation form, a complete software-based implementation form, or an implementation form including both hardware and software units. According to one implementation form, the processing process described in detailed description may be stored in a readable memory medium of a computing device, which may be any device or medium capable of storing codes and/or data to be used by a computer system, including but not limited to Application Specific Integrated Circuit (ASIC) Field - Programmable Gate Array (FPGA), semiconductor memory, etc.. According to one implementation form, the above respective processing devices may be implemented by using means for driving a general-purpose computer, and may also be implemented by using other processor devices such as a microcontroller, Field - Programmable Gate Array (FPGA) Application Specific Integrated Circuit (ASIC) or the combination thereof.

It needs to be specifically pointed out that although in the present specification, two base stations plus one mobile station or two base stations plus two mobile stations are taken as examples for describing the present invention, it should be understood by those skilled in the art that the present invention actually may support more base stations and mobile stations, and may also support the situation that multiple base stations have different numbers of antennas.

In addition, although in the present specification, a multi-cell MIMO system is taken as an example for describing the present invention, it should be understood by those skilled in the art that the present invention actually may be further applied to any existing system or any similar system to be developed in the future.

Although embodiments for carrying out the present invention are described in conjunction with accompanying drawings, those skilled in the art may make all kinds of variations or amendments within the scope of the appending claims.

## Claims

1. A mobile communication method employing a hierarchical virtual antenna architecture, comprising steps of:
negotiating, by a first base station, with a second base station about a transmission mode with a mobile station; and
according to the negotiated transmission mode, negotiating, by the first base station, with the second base station about respective demodulation reference signal frequency pattern allocation and measurement reference signal frequency pattern allocation in the hierarchical virtual antenna architecture.

2. The mobile communication method according to claim 1, wherein the step of negotiating respective demodulation reference signal frequency pattern allocation and measurement reference signal frequency pattern allocation in the hierarchical virtual antenna architecture further comprises steps of:
negotiating an index of a demodulation reference signal frequency pattern set; and
negotiating an index of a demodulation reference signal frequency pattern for each reference signal stream in the demodulation reference signal frequency pattern set.

3. The mobile communication method according to claim 2, wherein the step of negotiating respective demodulation reference signal frequency pattern allocation and measurement reference signal frequency pattern allocation in the hierarchical virtual antenna architecture further comprises a step of:
if there are unused demodulation reference signal frequency patterns, negotiating whether data symbols or null symbols are transmitted on the unused demodulation reference signal frequency patterns.

4. The mobile communication method according to claim 1, wherein the step of negotiating respective demodulation reference signal frequency pattern allocation and measurement reference signal frequency pattern allocation in the hierarchical virtual antenna architecture further comprises steps of:
negotiating an index of a measurement reference signal frequency pattern set;
negotiating which layer of the hierarchical virtual antenna architecture the measurement reference signal frequency pattern will be applied to; and
negotiating an index of the measurement reference signal frequency pattern in the measurement reference signal frequency pattern set.

5. The mobile communication method according to claim 4, wherein the step of negotiating respective demodulation reference signal frequency pattern allocation and measurement reference signal frequency pattern allocation in the hierarchical virtual antenna architecture further comprises a step of:
if there are unused measurement reference signal frequency patterns, negotiating whether data symbols or null symbols are transmitted on the unused measurement reference signal frequency patterns.

6. The mobile communication method according to claim 1, wherein the step of negotiating respective demodulation reference signal frequency pattern allocation and measurement reference signal frequency pattern allocation in the hierarchical virtual antenna architecture further comprises a step of:
applying a demodulation reference signal frequency pattern to an inner layer of the hierarchical virtual antenna architecture.

7. The mobile communication method according to claim 4, wherein the step of negotiating which layer of the hierarchical virtual antenna architecture the measurement reference signal frequency pattern will be applied to further comprises a step of:
applying a measurement reference signal frequency pattern to one of the layers except for the inner layer of the hierarchical virtual antenna architecture.

8. The mobile communication method according to claim 1, wherein the first base station and the second base station have the same demodulation reference signal frequency pattern allocation in the hierarchical virtual antenna architecture.

9. The mobile communication method according to claim 1, wherein the transmission mode is a Closed-Loop Macro-Diversity mode, an interference nulling mode, or a mode of joint processing with non-coherent precoding.

10. A base station employing a hierarchical virtual antenna architecture, comprising:
a transmission mode negotiating means for negotiating with another base station about a transmission mode with a mobile station; and
a frequency pattern allocation negotiating means for, according to the negotiated transmission mode, negotiating with said another base station about respective demodulation reference signal frequency pattern allocation and measurement reference signal frequency pattern allocation in the hierarchical virtual antenna architecture.

11. The base station according to claim 10, wherein the frequency pattern allocation negotiating means further comprises:
means for negotiating an index of a demodulation reference signal frequency pattern set; and
means for negotiating an index of a demodulation reference signal frequency pattern for each reference signal stream in the demodulation reference signal frequency pattern set.

12. The base station according to claim 11, wherein the frequency pattern allocation negotiating means further comprises:
means for, if there are unused demodulation reference signal frequency patterns, negotiating whether data symbols or null symbols are transmitted on the unused demodulation reference signal frequency patterns.

13. The base station according to claim 10, wherein the frequency pattern allocation negotiating means further comprises:
means for negotiating an index of a measurement reference signal frequency pattern set;
means for negotiating which layer of the hierarchical virtual antenna architecture the measurement reference signal frequency pattern will be applied to; and
means for negotiating an index of the measurement reference signal frequency pattern in the measurement reference signal frequency pattern set.

14. The base station according to claim 13, wherein the frequency pattern allocation negotiating means further comprises:
means for, if there are unused measurement reference signal frequency patterns, negotiating whether data symbols or null symbols are transmitted on the unused measurement reference signal frequency patterns.

15. The base station according to claim 10, wherein the frequency pattern allocation negotiating means further comprises:
means for applying a demodulation reference signal frequency pattern to an inner layer of the hierarchical virtual antenna architecture.

16. The base station according to claim 13, wherein the means for negotiating which layer of the hierarchical virtual antenna architecture the measurement reference signal frequency pattern will be applied to further comprises:
means for applying a measurement reference signal frequency pattern to one of the layers except for the inner layer of the hierarchical virtual antenna architecture.

17. The base station according to claim 10, wherein the base station and said another base station have the same demodulation reference signal frequency pattern allocation in the hierarchical virtual antenna architecture.

18. The base station according to claim 10, wherein the transmission mode is a Closed-Loop Macro-Diversity (CL-MD) mode, an interference nulling mode, or a mode of joint processing with non-coherent precoding.

19. A mobile communication system employing a hierarchical virtual antenna architecture, comprising the base station according to one of claims 10-19.
